# EUROPÄISCHE PATENTANMELDUNG

(11) **EP 4 184 062 A1**
(43) Veröffentlichungstag der Anmeldung: **24.05.2023**
(21) Anmeldenummer: 22203918.2
(22) Anmeldetag: 26.10.2022
(51) Int. Cl.: F24C 15/14

(54) **AUFFANGWANNE SOWIE BACKOFEN MIT AUFFANGWANNE**

(30) Priorität: 23.11.2021 DE 102021213199
(71) Anmelder: BSH Hausgeräte GmbH, 81739 München (DE)
(72) Erfinder: Bandov, Ivanko, 83301 Traunreut (DE); Jell, Peter, 83254 Breitbrunn (DE); Matousek, Rene, 83301 Traunreut (DE)

(57) **Zusammenfassung**

Die Erfindung betrifft eine Auffangwanne (2) zum Sammeln von Kondensat eines Backofens (4), mit einem sich im Wesentlichen in eine Längsrichtung erstreckenden, schalenförmigen Auffangabschnitt (12), und zumindest einem fest mit dem Auffangabschnitt (12) verbundenen, sich im Wesentlichen in einer Querrichtung von dem Auffangabschnitt (12) wegerstreckenden Schnapphaken (24), der ausgebildet ist, um ein Backofenbauteil (10) in der Querrichtung formschlüssig zu hintergreifen, und dessen Formschlusseingriff zum Lösen der Auffangwanne (2) vom dem Backofenbauteil (10) manuell entriegelbar ist. Ferner betrifft die Erfindung einen Backofen (4), mit einem Garraum, einer Tür (6) zum Verschließen des Garraums sowie einer solchen Auffangwanne (2), wobei die Auffangwanne (2) in Vertikalrichtung unterhalb der Tür (6) angeordnet ist.

## Beschreibung

Die vorliegende Offenbarung betrifft eine Auffangwanne zum Sammeln von Kondensat eines Backofens, insbesondere eines Backofens mit einer Dampffunktion. Ferner betrifft die vorliegende Offenbarung einen Backofen, insbesondere einen Backofen mit einer Dampffunktion, der einen Garraum, eine Tür zum Verschließen des Garraums sowie eine solche Auffangwanne aufweist.

Bei solchen Backöfen mit Dampffunktion schlägt sich in dem Garraum entstehendes Kondensat an der Tür nieder und läuft an einer Innenwand der Tür herab. Das herablaufende Kondensat muss aufgefangen werden, um zu vermeiden, dass das Kondensat aus dem Backofen austritt und auf Möbel, darunterliegende Schubladen oder den Boden tropft. Insbesondere bei häufigem Öffnen und Schließen der Backofentür und bei Verwendung eines Dampf-Programms oder bei Zubereitung von besonders wasserhaltigen Speisen kann es zu hoher Kondensat-Tropfenbildung kommen. Aus diesem Grund weisen bekannte Backöfen oftmals eine mit einem Türflansch oder einem Backofenflansch integral ausgebildete oder fest damit verbundene Tropfrinne auf, deren Fassungsvolumen jedoch bei hoher Kondensat-Tropfenbildung nicht ausreicht und die zum Reinigen und/oder zum Ausleeren nur schwer zugänglich ist.

Aus der DE 10 2016 224 708 A1 ist bereits eine Auffangwanne zum Auffangen von Kondensat in einem Backofen mit Dampffunktion bekannt, die nachträglich an einem Backofen integriert werden kann und etwa zur Reinigen oder zum Leeren der Auffangwanne aus dem Backofen entnehmbar ist. Die Auffangwanne ist dabei über eine schienenartige Führung lösbar an zwei Befestigungselementen aufgenommen, die wiederum mit Türscharnieren des Backofens formschlüssig verrastet sind. Zur Entnahme der Auffangwanne kann die Auffangwanne aus der schienenartigen Führung herausgezogen werden, während die Befestigungselemente mit den Türscharnieren formschlüssig verrastet bleiben. Der Stand der Technik hat jedoch den Nachteil, dass die Auffangwanne nicht fest mit den Befestigungselementen verbunden ist und somit nicht fest an dem Backofen angebracht ist, sondern durch einfaches Herausziehen aus den Führungsschienen der Befestigungselemente gelöst werden kann, so dass ein unbeabsichtigtes Entnehmen/Herausfallen der Auffangwanne nicht ausgeschlossen ist. Zudem hat die Befestigung über die Führungsschienen den Nachteil, dass ein gewisses Bewegungsspiel zwischen den Befestigungselementen und der Auffangwanne vorhanden sein muss, so dass die Auffangwanne nicht wackelfrei fixiert werden kann.

Es ist also die Aufgabe der Erfindung, die Nachteile aus dem Stand der Technik zu vermeiden, und eine Auffangwanne bereitzustellen, die einfach herausnehmbar und gleichzeitig stabil, insbesondere gegen unbeabsichtigtes Lösen gesichert, an dem Backofen befestigbar ist. Ferner soll die Auffangwanne ein ausreichend großes Fassungsvolumen aufweisen sowie leicht zu reinigen, gut integrierbar, kostengünstig und rückwärtskompatibel zu bestehenden Backöfen bzw. an Standardmaße eines Backofens angepasst sein. Zudem ist es die Aufgabe der Erfindung, einen Backofen mit einer solchen lösbar und stabil daran befestigbaren Auffangwanne bereitzustellen.

Die Aufgabe der Erfindung wird durch eine Auffangwanne mit den Merkmalen des Patentanspruch 1 gelöst. Zudem wird die Aufgabe der Erfindung durch einen Backofen mit den Merkmalen des nebengeordneten Patentanspruchs gelöst. Vorteilhafte Weiterbildungen sind Gegenstand der Unteransprüche.

Demnach weist die Auffangwanne einen länglichen bzw. sich im Wesentlichen in eine Längsrichtung erstreckenden, schalenförmigen Auffangabschnitt sowie zumindest einen fest an einem Längsende mit dem Auffangabschnitt verbundenen Schnapphaken auf.. Der Schnapphaken erstreckt sich im Wesentlichen in einer Querrichtung von dem Auffangabschnitt weg und ist ausgebildet, um ein Backofenbauteil in der Querrichtung formschlüssig zu hintergreifen, wobei der Formschlusseingriff des Schnapphakens zum Lösen der Auffangwanne vom dem Backofenbauteil manuell bzw. nur durch aktive Betätigung entriegelbar ist. Mit anderen Worten ist die Auffangwanne durch eine lösbare Schnappverbindung an dem Backofen befestigbar. Das heißt, dass die Schnappverbindung zwischen der Auffangwanne und dem Backofen durch ein bewusstes/gezieltes Entriegeln kontrolliert durch einen Benutzer lösbar ist. Die Befestigung über den zumindest einen Schnapphaken hat den Vorteil, dass eine aufclipsbare Auffangwanne bereitgestellt wird, die durch die Formschlussverbindung sicher an dem Backofen fixierbar ist und gleichzeitig durch die manuelle Lösbarkeit der Formschlussverbindung auf einfache Weise anbringbar und entnehmbar ist. Durch die aktive Entriegelbarkeit des Schnappverbindung lässt sich die Auffangwanne in vorteilhafter Weise widerstandslos, ruckfrei und kontrolliert aus dem Backofen entnehmen. Dadurch wird verhindert, dass beim Entnehmen der Auffangwanne die Flüssigkeit in der Auffangwanne zu schwappen beginnt. Da zum Entnehmen der Auffangwanne der Schnapphaken aktiv betätigt bzw. gelöst werden muss, wird ferner sichergestellt, dass sich die Aufangwanne nicht unbeabsichtigt, z.B. durch einen leichten Stoß, löst. Da der Schnapphaken so ausgebildet ist, dass er sich in Querrichtung von dem Auffangabschnitt wegerstreckt, um ein Backofenbauteil in der Querrichtung formschlüssig zu hintergreifen, und die Auffangwanne in der Regel in Querrichtung entnommen wird, wirkt der Formschluss in Entnahmerichtung der Auffangwanne.

Gemäß einer bevorzugten Ausführungsform kann der Schnapphaken eine sich von dem Auffangabschnitt, insbesondere von einem Längsende des Auffangabschnitts, in die Querrichtung wegerstreckende Zunge sowie einen von einem Endabschnitt der Zunge abgewinkelten Vorsprung aufweisen. Die Zunge kann vorzugsweise (in Richtung des Vorsprungs/in der Längsrichtung) federelastisch verlagerbar sein. Beispielsweise kann die Zunge durch einen Abschnitt der Seitenwandung gebildet sein, der durch eine Aussparung in Querrichtung der Auffangwanne nur an einem Endabschnitt fest mit der Seitenwand verbunden ist und an seinem anderen Endabschnitt (an dem der Vorsprung ausgebildet ist) ein freies Ende aufweist. So kann die Zunge auf einfache Weise federelastisch ausgestaltet werden. Durch die L-förmige Ausgestaltung des Schnapphakens wird die Position der Auffangwanne bzgl. des Backofenbauteils in Längs- und in Querrichtung festgelegt.

Gemäß einer bevorzugten Ausführungsform kann der Schnapphaken, genauer gesagt, das abgewinkelte freie Ende so ausgebildet sein, dass der Formschluss mit dem Backofenteil nur durch manuelles bzw. aktives Betätigen des Schnapphakens gelöst werden kann, beim Einsetzen der Auffangwanne jedoch der Schnapphaken selbsttätig einschnappt bzw. selbstätig (ohne manuelles Zutun) den Formschluss mit dem Backofenteil eingeht. Dadurch wird die Handhabung der Auffangwanne noch weiter vereinfacht.

Gemäß der bevorzugten Ausführungsform kann der Schnapphaken einen Betätigungsabschnitt zum Betätigen der elastischen Verlagerung der Zunge aufweisen. Beispielsweise kann der Betätigungsabschnitt in Form eines Hebels ausgebildet sein, der so mit der Zunge verbunden ist, dass eine Verlagerung des Hebels nach innen ein Verschwenken der Zunge nach außen erwirkt. Alternativ kann der Betätigungsabschnitt in Form einer Bedienfläche an einer nach innen ausgerichteten Fläche der Zunge ausgebildet sein, auf die eine Kraft nach außen durch manuelles Drücken aufgebracht werden kann, um den Vorsprung nach außen zu verlagern. Das Vorsehen des Betätigungsabschnitts hat den Vorteil, dass die Schnapphakenverbindung besonders einfach lösbar ist.

Gemäß einer bevorzugten Ausführungsform kann die Auffangwanne zwei Schnapphaken aufweisen, die ausgebildet sind, um das Backofenbauteil in zueinander entgegengesetzten Querrichtungen formschlüssig zu hintergreifen. Dies hat den Vorteil, dass die beiden Schnapphaken gezielt verlagert werden müssen, um ein Entnehmen der Auffangwanne zu ermöglichen. Somit kann die Auffangwanne nicht bei einem versehentlichen Verkippen unbeabsichtigt gelöst werden. Durch die beiden an den Längsenden der Auffangwanne vorgesehenen Schnapphaken ist die Auffangwanne in Längsrichtung festlegbar.

Gemäß der bevorzugten Ausführungsform können die beiden Schnapphaken an gegenüberliegenden Längsenden des Auffangabschnitts angebracht sein. Dies hat den Vorteil, dass sich eine besonders ergonomische Handhabbarkeit ergibt, bei der die Formschlussverbindung der beiden Schnapphaken gelöst werden kann, indem die Auffangwanne seitlich mit beiden Händen gehalten wird und die jeweils mit den Schnapphaken verbundenen Betätigungselemente betätigt werden, um den Formschlusseingriff der Schnapphaken zu lösen.

Gemäß der bevorzugten Ausführungsform kann die Auffangwanne zumindest einen, vorzugsweise zwei in Längsrichtung parallel versetzt angeordnete, Haltehaken aufweisen, wobei der zumindest eine Haltehaken an einer Frontwandung der Auffangwanne angebracht ist, sich im Wesentlichen entlang einer Außenseite der Frontwandung erstreckt und eine zu der Außenseite der Frontwandung hin vorstehende Nase aufweist.

Gemäß einer bevorzugten Ausführungsform kann die Auffangwanne werkstoffeinstückig ausgebildet sein. Insbesondere kann die Auffangwanne als ein Kunststoffspritzgussteil ausgebildet sein, so dass sich eine kostengünstige Fertigung realisieren lässt.

Gemäß einer bevorzugten Ausführungsform kann ein Füllvolumen des Auffangabschnitts größer als 80 Milliliter sein, vorzugsweise größer als 90 Milliliter sein, insbesondere zumindest 100 Milliliter betragen. So kann eine ausreichend große Menge an Kondensat aufgenommen werden.

Gemäß einer bevorzugten Ausführungsform kann die Frontwandung einen Rand des Auffangabschnitts ausbilden, wobei die Frontwandung so dimensioniert ist, dass der Rand über einen vorbestimmten Maximalfüllstand um zumindest 20% einer Maximalfüllhöhe (bei dem vorbestimmten Maximalfüllstand), vorzugsweise um zumindest 30 % der Maximalfüllhöhe, beispielsweise um maximal 60% der Maximalfüllhöhe, hervorsteht. Mit anderen Worten ist eine Vorderkante der Auffangwanne so geformt, dass ein Beckenrand/den Auffangabschnitt begrenzender Rand gegenüber dem Maximalfüllstand erhöht ist. Dadurch kann in vorteilhafter Weise ein Auslaufen aus dem Frontbereich verhindert werden. Zudem kann somit auch ein Auslaufen bei sich bewegendem/schwappendem Kondensat, etwa durch eine Entnahmebewegung der Auffangwanne oder durch ein Auswischen der Auffangwanne oder durch Kippen der Auffangwanne bei der Entnahme, vermieden werden.

Alternativ oder zusätzlich kann die Frontwandung gemäß der bevorzugten Ausführungsform so dimensioniert sein, dass das bis zu dem vorbestimmten Maximalfüllstand in dem Auffangabschnitt aufgenommene Kondensat bei Drehung der Auffangwanne um einen vorbestimmten Kippwinkel durch die Frontwandung zurückgehalten wird, wobei der vorbestimmte Kippwinkel einem Winkel entspricht, um den eine Entnahmerichtung, in der die Auffangwanne von dem Backofenbauteil lösbar ist, zu einer Vertikalrichtung geneigt ist. Das heißt, dass die Frontwandung so dimensioniert ist, dass das bis zu dem vorbestimmten Maximalfüllstand in dem Auffangabschnitt aufgenommene Kondensat nicht beim Entnehmen der Auffangwanne überläuft/ausläuft. Beispielsweise kann der vorbestimmte Kippwinkel 20° bis 70°, vorzugsweise 30° bis 50° betragen.

Gemäß einer bevorzugten Ausführungsform kann die Auffangwanne eine Überlauföffnung aufweisen, die so angeordnet ist, dass das Kondensat bei Überschreiten des vorbestimmten Maximalfüllstands in dem Auffangabschnitt durch die Überlauföffnung aus der Auffangwanne herausströmt. Das heißt, dass ein definierte Notüberlauf bei Überschreiten des Maximalfüllstands vorhanden ist, durch den das Kondensat kontrolliert ablaufen kann. Somit wird vermieden, dass das Kondensat beispielsweise über den Frontbereich zu Möbeln hin ausläuft.

Gemäß einer Weiterbildung der bevorzugten Ausführungsform kann die Überlauföffnung in einer der Seitenwandungen, insbesondere unterhalb des Schnapphakens, ausgebildet sein. Dies hat den Vorteil, dass das überlaufende Kondensat in eine Bodenplatte des Backofens ablaufen und dessen Volumen mitgenutzt werden kann, ohne dass das Kondensat unkontrolliert aus dem Backofen ausläuft.

Gemäß einer bevorzugten Ausführungsform kann die Auffangwanne zwei Zentriervorsprünge zum Führen eines Einschiebens der Auffangwanne aufweisen, wobei die Zentriervorsprünge in zueinander entgegengesetzte Längsrichtungen von dem Auffangabschnitt aus nach außen hervorstehen. Somit können die Zentriervorsprünge beim Einschieben der Auffangwanne beispielsweise an den Scharnierabschnitten entlanggleiten und/oder in den Scharnierabschnitten geführt werden, um die Auffangwanne in der Breitenrichtung des Backofens mittig zwischen den Scharnierabschnitten zu positionieren.

Gemäß einer bevorzugten Ausführungsform kann die Auffangwanne eine an einer Außenseite der Rückwandung angebrachte erste Dichtlippe und/oder eine an einer Außenseite einer der oder beiden Seitenwandungen angebrachte zweite Dichtlippe aufweisen. Somit kann sichergestellt werden, dass aus dem Backofen ablaufendes Wasser sicher in die Auffangwanne fließt.

Die Aufgabe der Erfindung wird auch durch einen Backofen, insbesondere durch einen Backofen mit einer Dampffunktion, gelöst, wobei der Backofen einen Garraum, eine Tür zum Verschließen des Garraums sowie eine beschriebene Auffangwanne aufweist, wobei die Auffangwanne in Vertikalrichtung unterhalb der Tür angeordnet ist. Vorzugsweise kann sich die Auffangwanne über die gesamte Türbreite erstrecken. Eine Breitenrichtung des Backofens bzw. der Tür entspricht dabei einer Längserstreckung/einer Längsrichtung der Auffangwanne. Diese Anordnung hat den Vorteil, dass ein maximaler Auffangbereich abgedeckt wird und Kondensat von der Tür nicht seitlich, d.h. in Längsrichtung der Auffangwanne, an der Auffangwanne vorbeitropfen kann.

Gemäß einer bevorzugten Ausführungsform kann die Tür zwischen einer geöffneten Position und einer geschlossenen Position verschwenkbar sein, wobei eine Innenkante, d.h. eine dem Garraum zugewandte Unterkante, der Tür sowohl in der geöffneten Position als auch in der geschlossenen Position mit dem Auffangabschnitt in Vertikalrichtung überlappend angeordnet ist. Somit kann stets gewährleistet werden, dass sowohl bei geöffneter Tür als auch bei geschlossener Tür das Kondensat von der Innenkante der Tür in die Auffangwanne tropft und darin aufgenommen werden kann.

Gemäß einer bevorzugten Ausführungsform kann der Backofen zwei Scharnierabschnitte zum schwenkbaren Anbringen der Tür sowie einen sich unterhalb einer Garraumöffnung, insbesondere zwischen den beiden Scharnierabschnitten, erstreckenden Backofenflansch aufweisen, wobei der zumindest eine Schnapphaken bzw. vorzugsweise die beiden Schnapphaken in einer befestigten Position der Auffangwanne den Backofenflansch in der Querrichtung, d.h. einer Backofentiefenrichtung, hintergreift bzw. hintergreifen.

Gemäß einer bevorzugten Ausführungsform kann der Backofenflansch eine sich entlang einer Breitenrichtung des Backofens erstreckende Falz aufweisen, in die der Haltehaken bzw. die Haltehaken in der befestigten Position der Auffangwanne eingreift bzw. eingreifen. Die Falz kann insbesondere als ein nach außen geöffnetes Falzauge ausgebildet sein, in das der Haltehaken bzw. die Haltehaken von außen eingreift bzw. eingreifen. Insbesondere kann die Falz so ausgebildet sein, dass sie von dem bzw. den Haltehaken in Vertikalrichtung hintergriffen wird. So kann ein sicherer Sitz der Auffangwanne an dem Backofenflansch gewährleistet werden.

Gemäß einer bevorzugten Ausführungsform können die Zentrierabsätze so ausgebildet sein, dass sie beim Befestigen der Auffangwanne an den Scharnierabschnitten entlanggleiten und/oder in den Scharnierabschnitten geführt werden. Insbesondere kann die Auffangwanne so in der Breitenrichtung des Backofens mittig zwischen den Scharnierabschnitten vorpositioniert/ausgemittelt werden, wodurch das Positionieren und Befestigen der Auffangwanne an dem Backofen erleichtert wird.

Gemäß einer bevorzugten Ausführungsform kann die Auffangwanne so auf die Tür abgestimmt sein, dass die Tür bei an dem Backofen befestigter Auffangwanne zwischen ihrer geöffneten Position und ihrer geschlossenen Position verschwenkbar ist. Das heißt, dass der gesamte Bewegungsablauf der Tür auch bei befestigter Auffangwanne toleranzsicher möglich bleibt.

Mit anderen Worten löst die Erfindung die Aufgabe, bei Backöfen, insbesondere mit Dampffunktion, austretendes Kondensat(-Wasser) zwischen der Tür und dem Garraum aufzunehmen und für einen Benutzer so zugänglich zu machen, dass es leicht entfernt werden kann. Insbesondere bei häufigem Öffnen und Schließen der Tür bei Dampfprogrammen oder bei wasserhaltigen Gerichten kann es zu hoher Kondensattropfenbildung auf einer Innenscheibe der Tür und/oder zur Bildung eines Wasserreservoirs oberhalb einer Türdichtung führen. Die Kondensatmenge kann bis zu 80ml betragen und durch bekannte Lösungen, wie eine Ausformung an einem Blechflansch des Backofens, nicht vollständig aufgenommen werden, so dass nicht aufgenommenes Wasser aus dem Backofen austreten und zu aufquellenden Möbeln, feuchtem Boden und feuchten Schubladen führen kann. Somit wird erfindungsgemäß eine leicht reinigbare, gut integrierbare, kostengünstige und rückwärtskompatible Auffangwanne bereitgestellt, die auf bestehenden Bauteilen aufgesetzt und sicher befestigt werden kann. Dabei erstreckt sich die Auffangwanne über einen möglichst großen Bereich, um einen maximalen Auffangbereich abzudecken, und gewährleistet gleichzeitig eine Durchlüftung der Tür zur Kühlung und zur Abfuhr von feuchter Luft. Gemäß der Erfindung ist die Auffangwanne als eine Clip-On-Kondensatwanne ausgebildet, die beispielsweise als ein Kunststoffspritzgussteil ausgebildet sein kann. Die Auffangwanne ist dabei mit einer Türableitkondensatleiste überlappend angeordnet, so dass nahezu die gesamte projizierte Fläche in dem Zwischenbereich durch die Auffangwanne bedeckt ist, um mögliche Tropen der Türableitkondensatleiste auffangen zu können. Zudem ist eine Vorderkante der Auffangwanne so geformt, dass ein erhöhter Beckenrand ein Auslaufen aus dem Frontbereich, etwa zum Möbel hin, unterbindet. Zudem ist ein Notüberlauf vorgesehen, der unterhalb von seitlichen Befestigungselementen angeordnet ist und überschüssiges Wasser in eine Bodenplatte des Backofens ableitet, so dass dessen Volumen mitgenutzt werden kann, bevor das Wasser aus dem Backofen ausläuft. Außerdem kann durch den erhöhten Beckenrand verhindert werden, dass beim Wasser beim Reinigen über den Beckenrand schwappt. Ferner ist die Auffangwanne so geformt, dass ein Bewegungsablauf einer Kondensatleiste der Tür, insbesondere einer Klapptür, toleranzsicher ermöglicht ist, so dass ein Entleeren der Kondensatleiste an der Tür in die Auffangwanne gewährleistet ist. Zur Befestigung weist die Auffangwanne seitlich zwei Schnapphaken mit möglichen Bedienflächen, die in Scharnieraussparungen an einem Backofenflansch eintauchen, und Haltehaken nach unten auf, welche die Auffangwanne an einem Backofenflanschfalz einhängen. Zur Montage der Auffangwanne können die Haken angesetzt und eingeschnappt werden. Seitlich kann ein Zentrierabsatz ausgebildet sein, der die Auffangwanne zwischen Backofenscharnieren vorpositioniert und ausmittelt. Zur Demontage der Auffangwanne können die seitlichen Schnapphaken entriegelt werden und die Auffangwanne mit einer leichten Drehbewegung entnommen werden. Zudem kann die Auffangwanne Dichtlippen zum Backofenflansch und/oder zum Backofenscharnier besitzen, so dass ablaufendes Wasser sicher in die Auffangwanne fließt und eine mögliche Klapperneigung vermieden wird.

### Kurzbeschreibung der Figuren

Fig. 1 ist eine perspektivische Darstellung einer erfindungsgemäßen Auffangwanne, die an einem erfindungsgemäßen Backofen angebracht ist,
Fig. 2 ist eine Querschnittsdarstellung der Auffangwanne in einer an dem Backofen befestigten Position,
Fig. 3 ist eine Querschnittsdarstellung der Auffangwanne in einer von dem Backofen gelösten Position,
Fig. 4 ist eine Querschnittsdarstellung der Auffangwanne in der an dem Backofen befestigten Position, wobei verschiedene Position einer Tür des Backofens dargestellt sind,
Fign. 5 und 6 sind perspektivische Darstellungen von Details der Auffangwanne, und
Fign. 7 und 8 sind perspektivische Darstellungen der Auffangwanne, die zusätzlich Dichtlippen aufweist.

### Beschreibung einer bevorzugten Ausführungsform

Nachstehend wir eine bevorzugte Ausführungsform der vorliegenden Offenbarung auf der Basis der zugehörigen Figuren beschrieben.

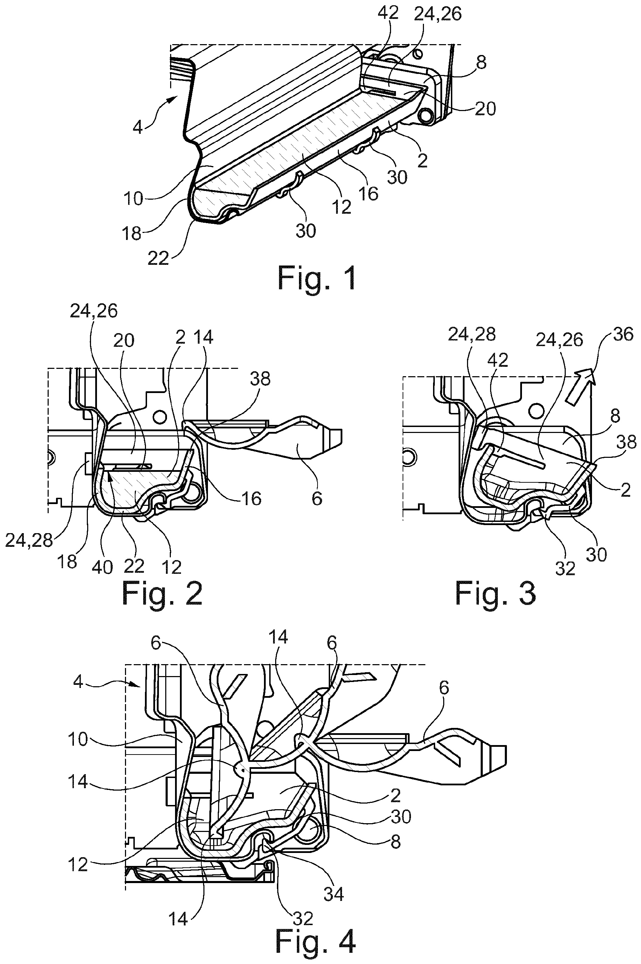

Fign. 1 bis 6 zeigen eine erfindungsgemäße Auffangwanne 2 gemäß einer ersten bevorzugten Ausführungsform. Die Auffangwanne 2 dient zum Auffangen von Kondensat(-Wasser) eines Backofens 4, das insbesondere bei einem Backofen mit Dampffunktion entsteht und aufgefangen werden muss. In den Figuren ist lediglich ein Teil des Backofens 4 dargestellt. Der Backofen 4 weist einen (nicht dargestellten) Garraum sowie eine Tür 6 zum Verschließen des Garraums auf. Die Tür 6 ist mittels zwei Scharnierabschnitten 8 schwenkbar an einem den Garraum ausbildenden Gehäuse des Backofens 4 angebracht. Durch die Anbringung der Tür 6 mittels der Scharnierabschnitte 8 kann die Tür zwischen einer geschlossenen Position und einer geöffneten Position (vgl. Fig. 4) verschwenkt werden. Insbesondere kann die Tür 6 um eine Achse entlang einer Backofenbreitenrichtung zum Öffnen nach außen/auf den Benutzer zu verschwenkt werden, d.h. aufgeklappt werden. Zwischen den beiden Scharnierabschnitten 8 erstreckt sich von einer Garraumöffnung aus ein Flansch 10 des Backofens 4 nach unten. Der Flansch 10 ist als ein Blechbauteil ausgebildet.

Die Auffangwanne 2 ist als eine Clip-On-Kondensatwanne ausgebildet und lösbar an dem Backofen 2, insbesondere an dem Flansch 10, befestigbar. Die Auffangwanne 2 ist in Vertikalrichtung unterhalb der Tür 6 angeordnet. Vorzugsweise erstreckt sich die Auffangwanne über die gesamte Türbreite. Die Auffangwanne 2 weist einen schalenförmigen Auffangabschnitt 12 auf, der ein Aufnahmevolumen zum Sammeln des, insbesondere von einer Innenkante 14 der Tür herabtropfenden, Kondensats bildet. Insbesondere ist die Auffangwanne 2 so ausgebildet, dass die Innenkante 14 der Tür sowohl in der geöffneten Position als auch in der geschlossenen Position mit dem Auffangabschnitt 12 in Vertikalrichtung überlappend angeordnet ist

Der Auffangabschnitt 12 erstreckt sich im Wesentlichen entlang einer Längsrichtung der Auffangwanne 2, wobei die Längsrichtung in einem an dem Backofen 4 befestigen Position der Auffangwanne 2 der Backofenbreitenrichtung entspricht. Der Auffangabschnitt 12 wird durch Wandungen der Auffangwanne 2, insbesondere eine Frontwandung 16, eine Rückwandung 18, zwei Seitenwandungen 20 und einen Boden 22 begrenzt, und ist in Vertikalrichtung nach oben hin geöffnet. Der Auffangabschnitt 12 weist in der dargestellten Ausführungsform einen im Wesentlichen halbkreisförmigen Querschnitt auf.

Die Auffangwanne 2 weist zumindest einen sich im Wesentlichen in einer Querrichtung der Auffangwanne 2 von dem Auffangabschnitt 12 wegerstreckenden Schnapphaken 24 auf. Dabei entspricht die Querrichtung der Auffangwanne 2 in der an dem Backofen 4 befestigen Position der Auffangwanne 2 der Backofentiefenrichtung. Der Schnapphaken 24 ist fest mit dem Auffangabschnitt 12 verbunden. Insbesondere ist der Schnapphaken 24 in Form einer sich in der Querrichtung von der Frontwandung 16 in Richtung der Rückwandung 18 erstreckenden Zunge 26 ausgebildet, an dessen Endabschnitt ein Vorsprung 28 nach innen abgewinkelt ist. Die Zunge 26 erstreckt sich in der Querrichtung über die Rückwandung 18 hinaus. Der Schnapphaken 24 ist ausgebildet, um ein Backofenbauteil, hier den Flansch 10, in der Querrichtung formschlüssig zu hintergreifen. Das heißt, dass der Vorsprung 28 den Flansch 10 in Querrichtung hintergreift und gegen eine Entnehmen in der Querrichtung sichert. Der Schnapphaken 24 ist dabei so ausgebildet, dass der Formschlusseingriff zum Lösen der Auffangwanne 2 vom dem Backofenbauteil, hier dem Flansch 10, manuell entriegelbar ist. Das heißt, dass der Schnapphaken 24 zum Lösen der Auffangwanne 2 manuell verlagert werden kann, insbesondere in der Backofenbreitenrichtung nach außen, um das Hintergreifen des Vorsprungs 28 zu lösen. Die Zunge 26 des Schnapphakens 24 ist dabei federelastisch nach außen verlagerbar, um den Vorsprung 28 an dem Flansch 10 vorbeiführen zu können.

Vorzugsweise kann der Schnapphaken 24 einen (nicht dargestellten) Betätigungsabschnitt zum Betätigen der elastischen Verlagerung der Zunge 26 aufweisen, durch den die elastische Verlagerung der Zunge 26 nach außen erwirkt werden kann. Beispielsweise kann der Betätigungsabschnitt in Form eines Hebels ausgebildet sein, der so mit der Zunge 26 verbunden ist, dass eine Verlagerung des Hebels nach innen ein Verschwenken der Zunge 26 nach außen erwirkt. Alternativ kann der Betätigungsabschnitt in Form einer Bedienfläche an einer nach innen ausgerichteten Fläche der Zunge 26 ausgebildet sein, auf die eine Kraft nach außen durch manuelles Drücken aufgebracht werden kann, um den Vorsprung 28 nach außen zu verlagern.

Insbesondere kann die Auffangwanne 2 zwei solcher Schnapphaken 24 aufweisen, die auf gegenüberliegenden Seiten der Auffangwanne 2 angeordnet sind. Das heißt, dass jeweils ein Schnapphaken 24 an einem Längsende der Auffangwanne 2 angeordnet ist. Vorzugsweise sind die beiden Schnapphaken 24 so ausgebildet, dass sie das Backofenbauteil, hier den Flansch 10, in zueinander entgegengesetzten Querrichtungen formschlüssig hintergreifen. Das heißt also, dass die beiden Schnapphaken 24 zum Lösen der Auffangwanne 2 in entgegengesetzte Richtung verlagert werden müssen, insbesondere durch Zusammendrücken/ Aufeinanderzudrücken/nach innen Drücken der beiden Betätigungsabschnitte.

Die Auffangwanne 2 weist zusätzlich zumindest einen, in der dargestellten Ausführungsform zwei in Längsrichtung parallel beabstandete, Haltehaken 30 auf. Die Haltehaken 30 sind fest mit dem Auffangabschnitt 12 verbunden und erstrecken sich von einer Außenseite der Frontwandung 16 im Wesentlichen entlang der Außenseite in Richtung zu dem Boden 22 hin. An einem Endabschnitt weisen die Haltehaken 30 eine nach innen, d.h. zu dem Auffangabschnitt 12 hin, abgewinkelte/vorstehende Nase 32 auf. Die Nase 32 ist ausgebildet, um formschlüssig in das Backofenbauteil, hier in eine Falz 34 des Flansches 10, einzugreifen. Der formschlüssige Eingriff der Nase 32 kann gelöst werden, indem die Auffangwanne 2 um einen vorbestimmten Kippwinkel zu der Vertikalrichtung geneigt/gedreht wird. Somit kann die Auffangwanne 2 von dem Backofen 4 gelöst werden, indem die Betätigungsabschnitte der Schnapphaken 24 zusammengedrückt werden, die Auffangwanne 2 um den vorbestimmten Kippwinkel gedreht wird und die Auffangwanne 2 dann in einer Entnahmerichtung 36, die zu der Vertikalrichtung um den vorbestimmten Kippwinkel geneigt ist, aus dem Backofen herausgezogen/herausgenommen werden kann (vgl. Fig. 3).

Die Frontwandung 16 bildet einen Rand 38 des Auffangabschnitts 12 aus. Dabei ist die Frontwandung 16 so dimensioniert, dass der Rand 38 über einen vorbestimmten Maximalfüllstand 40 hervorsteht. Beispielsweise kann der Rand 38 um zumindest 20% einer Maximalfüllhöhe über den vorbestimmten Maximalfüllstand 40 hervorstehen. Vorzugsweise ist die Frontwandung 16 zudem so dimensioniert, dass das bis zu dem vorbestimmten Maximalfüllstand 40 in dem Auffangabschnitt 12 aufgenommene Kondensat bei Drehung der Auffangwanne 2 um den vorbestimmten Kippwinkel durch die Frontwandung 16 zurückgehalten wird. Das heißt, dass der Rand 38 der Frontwandung so hoch gewählt ist, dass das Kondensat bei Drehung der Auffangwanne in die Entnahmerichtung 36 und bei vorbestimmtem Maximalfüllstand 40 nicht über den Rand 38 überläuft.

Zudem weist die Auffangwanne 2 eine Überlauföffnung 42 aufweist. Die Überlauföffnung 42 ist so angeordnet, dass das Kondensat bei Überschreiten des vorbestimmten Maximalfüllstands in dem Auffangabschnitt 12 durch die Überlauföffnung 42 aus der Auffangwanne 2 herausströmt. In der dargestellten Ausführungsform ist die Überlauföffnung 42 in einer der Seitenwandungen 20, insbesondere unterhalb des Schnapphakens 24, ausgebildet.

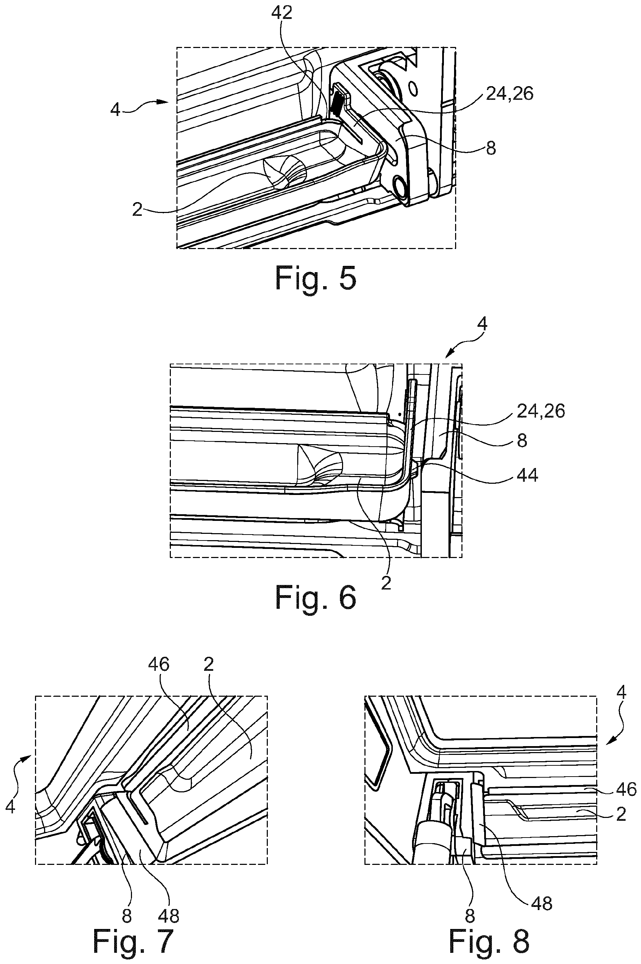

Wie in Fig. 6 zu erkennen ist, weist die Auffangwanne 2 zwei Zentriervorsprünge 44 zum Führen eines Einschiebens der Auffangwanne 2 auf. Die Zentriervorsprünge 44 stehen in zueinander entgegengesetzte Längsrichtungen von dem Auffangabschnitt 12 aus, insbesondere von den Seitenwandungen 20 aus, nach außen hervor. So kann die Auffangwanne 2 beim Einschieben mittig zwischen den Scharnierabschnitten 8 geführt werden.

Wie in Fign. 7 und 8 zu erkennen ist, kann die Auffangwanne 2 eine an einer Außenseite der Rückwand 18 angebrachte erste Dichtlippe 46 sowie eine an einer Außenseite einer der oder beiden Seitenwandungen 20 angebrachte zwei Dichtlippe 48 aufweisen.

## Patentansprüche

1. Auffangwanne (2) zum Sammeln von Kondensat eines Backofens (4), insbesondere eines Backofens (4) mit einer Dampffunktion, mit
einem sich im Wesentlichen in eine Längsrichtung erstreckenden, schalenförmigen Auffangabschnitt (12), und
zumindest einem fest mit dem Auffangabschnitt (12) verbundenen, sich im Wesentlichen in einer Querrichtung von dem Auffangabschnitt (12) wegerstreckenden Schnapphaken (24), der ausgebildet ist, um ein Backofenbauteil (10) in der Querrichtung formschlüssig zu hintergreifen, und dessen Formschlusseingriff zum Lösen der Auffangwanne (2) vom dem Backofenbauteil (10) manuell entriegelbar ist.

2. Auffangwanne (2) nach Anspruch 1, **dadurch gekennzeichnet, dass** der Schnapphaken (24) eine sich von dem Auffangabschnitt (12), insbesondere von einer an einem Längsende angeordneten Seitenwandung (20) des Auffangabschnitts (12), in die Querrichtung wegerstreckende Zunge (26) sowie einen von einem Endabschnitt der Zunge (26) abgewinkelten Vorsprung (28) aufweist, wobei die Zunge (26) federelastisch verlagerbar ist.

3. Auffangwanne (2) nach Anspruch 2, **dadurch gekennzeichnet, dass** der Schnapphaken (24) einen Betätigungsabschnitt zum Betätigen der elastischen Verlagerung der Zunge (26) aufweist.

4. Auffangwanne (2) nach einem der Ansprüche 1 bis 3, **dadurch gekennzeichnet, dass** die Auffangwanne (2) zwei Schnapphaken (24) aufweist, die ausgebildet sind, um das Backofenbauteil (10) in zueinander entgegengesetzten Querrichtungen formschlüssig zu hintergreifen, wobei die beiden Schnapphaken (24) an gegenüberliegenden Längsenden des Auffangabschnitts (12) angebracht sind.

5. Auffangwanne (2) nach einem der Ansprüche 1 bis 4, **dadurch gekennzeichnet, dass** die Auffangwanne (2) zumindest einen, vorzugsweise zwei in Längsrichtung parallel versetzt angeordnete, Haltehaken (30) aufweist, wobei der Haltehaken (30) an einer Frontwandung (16) der Auffangwanne (2) angebracht ist, sich im Wesentlichen entlang einer Außenseite der Frontwandung (16) erstreckt und eine zu der Außenseite der Frontwandung (16) hin vorstehende Nase (32) aufweist.

6. Auffangwanne (2) nach einem der Ansprüche 1 bis 5, **dadurch gekennzeichnet, dass** eine oder die Frontwandung (16) der Auffangwanne (2) einen Rand (38) des Auffangabschnitts (12) ausbildet, wobei die Frontwandung (16) so dimensioniert ist, dass der Rand (38) über einen vorbestimmten Maximalfüllstand um zumindest 20% einer Maximalfüllhöhe hervorsteht, und/oder dass die Frontwandung (16) so dimensioniert ist, dass das bis zu dem vorbestimmten Maximalfüllstand in dem Auffangabschnitt (12) aufgenommene Kondensat bei Drehung der Auffangwanne (2) um einen vorbestimmten Kippwinkel durch die Frontwandung zurückgehalten wird, wobei der vorbestimmte Kippwinkel einem Winkel entspricht, um den eine Entnahmerichtung, in der die Auffangwanne (2) von dem Backofenbauteil (10) lösbar ist, zu einer Vertikalrichtung geneigt ist.

7. Auffangwanne (2) nach Anspruch 6, **dadurch gekennzeichnet, dass** die Auffangwanne (2) eine Überlauföffnung (42) aufweist, die so angeordnet ist, dass das Kondensat bei Überschreiten des vorbestimmten Maximalfüllstands in dem Auffangabschnitt (12) durch die Überlauföffnung (42) aus der Auffangwanne (2) herausströmt, wobei die Überlauföffnung (42) vorzugsweise in einer der Seitenwandungen (20), insbesondere unterhalb des Schnapphakens (24), ausgebildet ist.

8. Auffangwanne (2) nach einem der Ansprüche 1 bis 7, **dadurch gekennzeichnet, dass** die Auffangwanne (2) zwei Zentriervorsprünge (44) zum Führen eines Einschiebens der Auffangwanne (2) aufweist, wobei die Zentriervorsprünge (44) in zueinander entgegengesetzte Längsrichtungen von dem Auffangabschnitt (12) aus nach außen hervorstehen.

9. Backofen (4), insbesondere Backofen (4) mit einer Dampffunktion,
mit einem Garraum, einer Tür (6) zum Verschließen des Garraums sowie einer Auffangwanne (2) nach einem der Ansprüche 1 bis 8, **dadurch gekennzeichnet, dass** die Auffangwanne (2) in Vertikalrichtung unterhalb der Tür (6) angeordnet ist und sich vorzugsweise über die gesamte Türbreite erstreckt.

10. Backofen (4) nach Anspruch 9, **dadurch gekennzeichnet, dass** die Tür (6) zwischen einer geöffneten Position und einer geschlossenen Position verschwenkbar ist, wobei eine Innenkante (14) der Tür (6) sowohl in der geöffneten Position als auch in der geschlossenen Position mit dem Auffangabschnitt (12) in Vertikalrichtung überlappend angeordnet ist.
